# EUROPÄISCHE PATENTSCHRIFT

(11) **EP 2 957 363 B1**
(45) Veröffentlichungstag und Bekanntmachung des Hinweises auf die Patenterteilung: **04.01.2017**
(21) Anmeldenummer: 15171254.4
(22) Anmeldetag: 09.06.2015
(51) Int. Cl.: B21D 39/20, B21D 41/02, B29C 57/04

(54) **MECHANISCHER ROHREXPANDER**
MECHANICAL TUBE EXPANDER
EXPANDEUR MECANIQUE DE TUYAUX

(30) Priorität: 16.06.2014 DE 102014008550
(43) Veröffentlichungstag der Anmeldung: 23.12.2015
(73) Patentinhaber: SMS group GmbH, 40237 Düsseldorf (DE)
(72) Erfinder: Täubner, Carsten, 42781 Haan (DE); Jülicher, Heike, 41366 Schwalmtal (DE)
(74) Vertreter: Reuther, Martin

(56) Entgegenhaltungen:
- EP-A2- 0 284 773
- EP-A2- 1 757 381
- WO-A2-2007/107273
- JP-A- 2010 075 989
- US-A- 1 418 721
- US-A- 3 385 087

## Beschreibung

Die Erfindung betrifft einen mechanischer Rohrexpander zum schrittweisen Aufweiten von Rohren gemäß dem Oberbegriff des Anspruchs 1.

Entsprechende mechanische Rohrexpander sind hinlänglich, beispielsweise aus der DE 22 64 207 B1, bekannt und dienen dem schrittweisen Aufweiten von Rohren, indem expandierende Segmente jeweils von Innen auf die Rohre wirken und diese aufweiten. Dieses Aufweiten erfolgt jeweils schrittweise, indem die Segmente jeweils lediglich einen axialen Abschnitt des Rohrs aufweiten. In der Regel finden derartige mechanische Rohrexpander bei Großrohren Anwendung, wobei diese jedoch auch bei etwas kleineren Großrohren, beispielsweise bei Rohren unter 50,8 cm (20 "), zur Anwendung kommen, insbesondere wenn diese Rohre dickwandiger ausgebildet sind, und sind von Rohrendenexpandern zu unterscheiden, wie sie beispielsweise in der WO 2007/107273 A2, der US 1,418,721 A, der EP 0 284 773 A2, der US 3,385,087, der WO 84/00120 A1, der US 4,198,844 oder der DE 296 18 268 U1 offenbart sind und die insbesondere nicht in die Rohre hinein verlagert werden können. Außerdem sind entsprechende Rohrexpander von nicht gattungsgemäßen Rohrsegmentexpandern zu unterschieden, wie sie beispielsweise aus der EP 1 757 381 A2 bekannt sind und die insbesondere lediglich einzelne Segmente des Rohres aufweiten.

Hierbei umfassen derartige mechanische Rohrexpander in der Regel eine Zugstange, einen hohlen Druckholm, in welchem die Zugstange axial bezüglich des Druckholms verlagerbar angeordnet ist, einen Werkzeugkopf, der mit einem mit der Zugstange wirkverbundenen Keil sowie die an dem Keil angeordneten, axial an dem Druckholm abgestützten und durch eine Axialbewegung des Keils in Bezug auf den Druckholm radial verlagerbaren expandierenden Segmente umfasst, sowie einen die Zugstange in Bezug auf den Druckholm axial verlagernden Antrieb. Diese Anordnung ermöglicht es, den Werkzeugkopf mit den expandierenden Segmenten über sehr lange Rohrlängen axial in die Rohre zu verlagern und das entsprechende Rohr schrittweise aufzuweiten, indem über den Antrieb und den Druckholm bzw. die Zugstange entsprechende Kräfte auf die expandierenden Segmente aufgebracht werden. In der Regel sind die expandierenden Segmente derart in Führungen in Bezug auf den Druckholm und den Keil angebracht, dass auch ein Rückhub über den Antrieb ohne weiteres möglich ist, sodass die Segmente nach dem Expansionsvorgang wieder radial eingefahren werden und der Werkzeugkopf axial in dem Rohr versetzt werden können, um dann einen nächsten Aufweitungsschritt durchführen zu können.

Es ist Aufgabe vorliegender Erfindung, einen mechanischen Rohrexpander bereitzustellen, bei welchem über die Zugstange und den Keil bei gegebenem Außendurchmesser möglichst große Kräfte übertragen werden können.

Die Aufgabe der Erfindung wird durch einen mechanischen Rohrexpander mit den Merkmalen des Anspruchs 1 gelöst. Weitere, ggf. auch unabhängig hiervon vorteilhafte, Ausgestaltungen finden sich in den Unteransprüchen sowie der nachfolgenden Beschreibung.

So ermöglicht es ein mechanischer Rohrexpander zum schrittweisen Aufweiten von Rohren, umfassend eine Zugstange, einen hohlen Druckholm, in welchem die Zugstange axial bezüglich des Druckholms verlagerbar angeordnet ist, einen Werkzeugkopf, der einen mit der Zugstange wirkverbundenen Keil sowie an dem Keil angeordnete, axial an dem Druckholm abgestützte und durch eine Axialbewegung des Keils in Bezug auf den Druckholm radial verlagerbare expandierende Segmente umfasst, sowie einen die Zugstange in Bezug auf den Druckholm axial verlagernden Antrieb, welcher sich dadurch auszeichnet, dass die Zugstange und der Keil über eine zerstörungsfrei nicht lösbare Verbindung oder einstückig miteinander verbunden sind, die Übertragung möglichst hoher Kräfte über die Zugstange und den Keil bei gegebenem Außendurchmesser.

Dadurch, dass die Zugstange und der Keil über die zerstörungsfrei nicht lösbare Verbindung bzw. aufgrund ihrer einstückigen Ausgestaltung zu einer baulichen Einheit verbunden sind, kann die Kraft, die über eine derartige bauliche Einheit übertragen werden kann, bei vorgegebenen räumlichen Dimensionen maximiert werden. Dieses ist insbesondere bei Großrohren mit kleineren Durchmessern, also insbesondere bei Rohren mit Durchmessern unter 50,8 cm, von Vorteil, wenn diese dickwandiger sind und entsprechend hohe Kräfte aufgebracht werden müssen, da aufgrund der kleinen Durchmesser der Rohre nur begrenzt Raum für die Unterbringung der expandierenden Segmente, des Keils, der Zugstange und des Druckholms, in welche die Zugstange verläuft, verbleiben.

In diesem Zusammenhang sei erwähnt, dass die Abstützung der expandierenden Segmente an dem Druckholm dazu dient, aufgrund der Bewegung des Keils bedingte Axialkräfte, welche dazu neigen, die expandierenden Segmente in axialer Richtung der Bewegung des Keils folgen zu lassen, aufzunehmen, sodass die expandierenden Segmente auf eine axiale Verlagerung des Keils in Richtung dieser Abstützung durch eine radiale Verlagerung reagieren müssen. Auf diese Weise kann die axiale Relativbewegung zwischen Zugstange und Druckholm in eine radiale Bewegung der expandierenden Segmente gewandelt werden.

Um den Werkzeugkopf mit den expandierenden Segmenten über sehr lange Rohrlängen axial in die Rohre verlagern und das entsprechende Rohr schrittweise aufweiten zu können, indem über den Antrieb und den Druckholm bzw. die Zugstange entsprechende Kräfte auf die expandierenden Segmente aufgebracht werden, sind bei derartigen Rohrexpandern die Segmente weiter als der Durchmesser des Druckholms radial expandierbar bzw. die Länge des Druckholms und der Zugstange mindestens das Fünffache des Durchmessers des Druckholms bzw. der zu expandierenden Rohre.

In der Regel werden im Bereich der Abstützung und an dem Keil Führungsnuten oder sonstige Baugruppen mit Hinterschneidungen vorgesehen sein, welche mit entsprechenden Kulissen oder Hinterschneidungen an den Segmenten wechselwirken, um einen Rückhub der expandierenden Segmente bei einer Richtungsumkehr der Axialbewegung zwischen Zugstange und Druckholm, die dann als Druckstange und hohler Zugholm wirken, zu ermöglichen. Hierbei ist jedoch die Kraftsituation beim Rückhub in der Regel unkritisch, da der Rückhub im Wesentlichen kraftfrei erfolgt.

Dementsprechend ist es auch unkritisch, wenn der Druckholm gegebenenfalls mehrteilig ausgebildet ist und möglicherweise auch zu dem Werkzeugkopf zu rechnenden Baugruppen umfasst. In vorliegendem Zusammenhang wird davon ausgegangen, dass sämtliche auf Druck während des Expansionsvorgangs beanspruchte Baugruppen zwischen dem Antrieb und den expandierenden Segmenten dem Druckholm zuzurechnen sind.

Ebenso wie der Druckholm gegebenenfalls mehrteilig ausgebildet sein kann, ist es denkbar, den Keil mehrteilig auszubilden. So können beispielsweise gesondert gehärtete Führungs- oder Andruckleisten an dem Keil angeordnet sein, auf denen die expandierenden Segmente gleiten können. Auch können dort entsprechend Gleitmaterialien noch eingesetzt sein. Insbesondere ist es auch denkbar, dass durch entsprechende aufgesetzte Baugruppen erst eine endgültige Kalibrierung und Darstellung der Keilwinkel, die letztlich mit den jeweiligen expandierenden Segmenten wechselwirken, erfolgt. Dementsprechend umfasst der Begriff des "Keils" in vorliegendem Zusammenhang jede mit der Zugstange über eine zerstörungsfrei nicht lösbare Verbindung oder einstückig verbundene Baugruppe, die sich an dem dem Antrieb abgewandten Ende der Zugstange radial über die Zugstange hinaus, vorzugsweise auch über den Innendurchmesser des Druckholms hinaus, erstreckt bzw. jede an dem dem Antrieb abgewandten Ende der Zugstange angeordnete Baugruppe, mit einem sich entgegen der Zugrichtung erweiternden Keilwinkel unter 45°, vorzugsweise unter 30° bzw. unter 20°. Letztere Winkelangaben unterscheiden derartige Keilwinkel von etwaigen Gewindewinkeln für Schraubgewinde oder ähnliche Ausformungen, die möglicherweise im Stand der Technik zu finden sein könnten, aber mit der Keilfunktion, also einer entgegen der Zugrichtung vorgesehenen Erweiterung, über welche letztlich die Segmente radial nach außen mit einer Kraft beaufschlagt werden, nichts zu tun haben, da insbesondere entsprechende Schraubengewinde und ähnliche Baugruppen mit steileren Flanken arbeiten, wobei entsprechend steile Flanken zu hohen Reibungen und zu ungünstigen Kraftverhältnissen beim Kraftübergang zwischen den Keil und den expandierenden Segmenten führen würden.

Es versteht sich, dass auch die Zugstange mehrteilig ausgestaltet sein kann, solange - insbesondere im Bereich des Druckholms und zum Keil hin - lediglich zerstörungsfrei nicht lösbare Verbindungen zu finden sind.

Vorzugsweise weist der Keil eine Keilspitze mit zylinderförmiger Mantelfläche auf. Eine derartige zylinderförmige Mantelfläche ermöglicht es, dass etwaige Spannungen, die während des Ziehens aufgrund der Keilform oder aufgrund etwaiger an dem Keil vorgesehener Baugruppen auftreten, in Richtung auf die Zugstange vergleichmäßigt und in Zugrichtung ausgeglichen werden können, wodurch letztlich die zerstörungsfrei nicht lösbare Verbindung zu der Zugstange entlastet werden und mithin insgesamt größere Zugspannungen übertragen kann.

Dementsprechend ist es von Vorteil, wenn sich der Keil in Richtung auf den Antrieb gegebenenfalls bis zur oben genannten Keilspitze, verjüngt und auf diese Weise die Kräfte gleichmäßig in die Keilspitze eingeleitet werden können.

Auch ist es aus Gründen der Stabilität insgesamt von Vorteil, wenn die Keilspitze einstückig mit dem restlichen Keil ausgebildet ist, da dann die Spannungen besonders gleichförmig in die Keilspitze eingebracht werden und dort ausklingen können.

Vorzugsweise weist die Keilspitze eine axiale Keilspitzenerstreckung auf, die größer als eine Abklinglänge ist, innerhalb derer durch die Keilform des Keils und der an ihm vorgesehenen Baugruppen bedingte lokalen Spannungen abgeklungen sind. Dieses letztlich aus der Mechanik bekannte Problem, in dem lokale Spannungen bei bestimmten Kräften innerhalb einer bestimmten Abklinglänge abklingen, führt dazu, dass bei Wahl einer ausreichend langen Keilspitze am axial der Zugstange zugewandten Ende der Keilspitze keine oder nur ausreichend geringe lokale Spannungen sondern lediglich über die gesamte Keilspitze radial verteilt die zur Expansion notwendigerweise auftretenden Zugspannungen zu finden sind, sodass die zerstörungsfrei nicht lösbare Verbindung zwischen Keilspitze und Zugstange möglichst gleichförmig belastet ist und mithin möglichst große Zugkräfte übertragen kann.

Als entsprechende Baugruppen, die an dem Keil zu Störungen des Spannungsbilds neben der eigentlichen Keilform führen können, kommen beispielsweise Anformungen, an denen sich Führungsleisten abstützen, oder auch Nuten in Frage. Ebenso führen lokale Auflageflächen der expandierenden Segmente oder auch Punktkontakte bzw. kleinere Flächenkontakte von Baugruppen, die mit den Expansionskräften mitbelastet werden, zu derartigen lokalen Spannungen.

In der Regel wird es ausreichen, wenn die Keilspitze eine axiale Keilspitzenerstreckung aufweist, die größer als ein halber, vorzugsweise größer als ein ganzer, Durchmesser der Zugstange ist. Bei einer derartigen Erstreckung ist damit zu rechnen, dass lokale Spannungen bis zu der zerstörungsfrei nicht lösbaren Verbindung ausreichend abgeklungen sind.

Vorzugsweise sind der Durchmesser der Zugstange und der Durchmesser der Keilspitze gleich, sodass die zerstörungsfrei nicht lösbare Verbindung möglichst großflächig und möglichst gleichförmig ausgebildet werden kann, was letztlich auch zu einer Maximierung der übertragbaren Kräfte bei vergleichbarer räumlicher Dimension führt. Insbesondere können dann etwaige lokale Spannungen, die durch Durchmesserunterschiede bedingt sein könnten, auf ein Minimum reduziert werden.

Die zerstörungsfrei nicht lösbare Verbindung kann axial innerhalb des Druckholms angeordnet sein. Dieses ermöglicht insbesondere einen ausreichend großen Abstand dieser zerstörungsfrei nicht lösbaren Verbindung zu dem Keil, sodass entsprechend lokale Spannungen betriebssicher ausreichend bis zu dieser Verbindung abgeklungen sein können. Darüber hinaus finden sich innerhalb des Druckholms in der Regel nur sehr wenige relevante Baugruppen neben der Zugstange selbst, wie beispielsweise Zentralbohrungen, über welche eine Versorgung der Werkzeugkopfs mit Elektrizität oder sonstigen Medien gewährleistet werden kann. Im Übrigen ist im Bereich des Druckholms in der Regel ausreichend Platz, sodass die zerstörungsfrei nicht lösbare Verbindung andere Baugruppen nicht behindert, wenn sie axial innerhalb des Druckholms angeordnet ist.

Dementsprechend ist es von Vorteil, wenn die Keilspitze bis innerhalb des Druckholms reicht, sodass keine weiteren zerstörungsfrei nicht lösbaren Verbindungen vorgesehen sein müssen. Je nach konkreten Verhältnissen ist es nicht unbedingt vorteilhaft, die Keilspitze mit zylinderförmiger Mantelfläche sehr lang auszubilden, da häufig ein Kegel noch nachbearbeitet werden muss, was durch eine übermäßig lange Keilspitze, die dementsprechend zu einer verhältnismäßig unhandlichen Baugruppe führt, erschwert wird. Insoweit es jedoch von der Fertigung her möglich ist, den Keil in ausreichendem Maße zu bearbeiten, auch wenn eine lange Keilspitze vorhanden ist, ist es denkbar, die Keilspitze äußerst lang auszugestalten, wobei diese - wenn sie den gesamten Druckholm durchstößt - einstückig auch die Zugstange bildet bzw. bilden kann.

Als zerstörungsfrei nicht lösbare Verbindungen kommen sämtliche Verbindungsarten in Frage, die als unlösbar bezeichnet werden bzw. unlösbar sind, solange über die entsprechende Verbindung ausreichend Kraft bei gegebenem Durchmesser - insbesondere also gegebenenfalls bei einem Durchmesser kleiner als dem Innendurchmesser des Druckholms - übertragen werden kann. Insbesondere können dementsprechend Aufschrumpfungen oder Kaltverschweißungen aber insbesondere auch herkömmliche Schweißverbindungen zur Anwendung kommen, nachdem es möglich ist, letztere Verbindungen derart stabil auszubilden, dass letztlich eine nennenswerte Reduktion der übertragbaren Zugkräfte über eine derartige zerstörungsfrei nicht lösbare Verbindung gegenüber den eigentlichen Zugstangen bzw. Keilspitzen bei gegebenen Durchmesser nicht zu finden ist.

Vorzugsweise sind die Zugstange und der Antrieb über eine zerstörungsfrei lösbare Verbindung miteinander verbunden, sodass gegebenenfalls immer noch ein Werkzeugwechsel der dann jedoch auch einen Wechsel der Zugstange bedingt, durchgeführt werden kann, wenn beispielsweise Rohre mit abweichenden Rohrdurchmessern aufgeweitet werden sollen. Derartige zerstörungsfrei lösbare Verbindungen sind an sich aus dem Stand der Technik hinlänglich als Schraubverbindungen oder sonstige offenbare Formschlussverbindungen bekannt und können beispielsweise axial antriebsseitig des Druckholms angeordnet sein, wo für entsprechende Verbindungen ausreichend Platz besteht. Letzteres gilt insbesondere in radialer Hinsicht, beispielsweise für entsprechende Gewinde und Muttern, wobei der dort mögliche radiale Bauraum es bedingt, dass hier radial Aufweitungen der Zugstangen und auch ein radiales Ansetzen von Baugruppen mit größerem Durchmesser als dem Innendurchmesser des Druckholms möglich sind, sodass entsprechend zerstörungsfrei lösbare Verbindungen ausreichend groß, sodass auch ausreichend große Kräfte übertragen werden können, ausgebildet sein können.

Aufgrund der zerstörungsfrei nicht lösbaren Verbindung zwischen Keil und Zugstange kann auf ein Durchgreifen der Zugstange durch den Keil verzichtet werden, was letztlich einen erheblichen Gewinn an Bauraum bzw. an Material innerhalb des Keils bedeutet, da eine entsprechend große Ausnehmung für die Zugstange innerhalb des Keil unterbleiben kann. Dieser Gewinn ermöglicht es einerseits, den Keil erheblich stabiler auszugestalten, sodass er entsprechenden Zugbeanspruchungen, wie sie von der zerstörungsfrei nicht lösbaren Verbindung auf ihn übertragen werden, ohne weiteres standhalten kann. Hierbei ist es andererseits ohne weiteres möglich, eine Zentralbohrung aber auch weitere Versorgungsbohrungen innerhalb des Keils vorzusehen, die beispielsweise für eine Versorgung mit Schmiermittel oder aber auch für elektrische Leitungen oder ähnliche Zwecke benutzt werden können, ohne eine ausreichend stabile Integrität des Keils zu verlieren. Während an sich mithin eine zentrale Bohrung für einen Durchlass der Zugstange bekannt ist, bedingt der Gewinn an Bauraum für den Keil an sich die Möglichkeit, dass für zusätzliche Versorgungsbohrungen ausreichend Platz verbleibt.

Weitere Vorteile, Ziele und Eigenschaften vorliegender Erfindung werden anhand nachfolgender Beschreibung von Ausführungsbeispielen erläutert, die insbesondere auch in anliegender Zeichnung dargestellt sind. In der Zeichnung zeigen:
Figur 1 einen schematischen Querschnitt durch einen ersten mechanischen Rohrexpander; und
Figur 2 einen schematischen Querschnitt durch einen zweiten mechanischen Rohrexpander.

Die in den Figuren dargestellten mechanischen Rohrexpander 1 umfassen jeweils eine Zugstange 10, einen Druckholm 20, einen Werkzeugkopf 30 mit einem Keil 31 und mit expandierenden Segmenten 37 sowie einem Antrieb 40. Hierbei ist der Werkzeugkopf 30 an einem axialen Ende von Zugstange 10 und Druckholm 20 und der Antrieb 40 an dem anderen axialen Ende von Zugstange 10 und Druckholm 20 angeordnet, während die Zugstange 10 selbst innerhalb des Druckholms 20 angeordnet ist.

Bei beiden Ausführungsbeispielen umfasst der Antrieb 40 einen Zylinder 42 sowie einen Kolben 44, der axial in dem Zylinder 42 hin und her verlagerbar ist, indem jeweils Hydraulikleitungen 46 in an sich bekannter Weise mit Hydraulikflüssigkeit und Druck beaufschlagt werden. Es versteht sich, dass in abgewandelten Ausführungsformen auch andere Formen entsprechender Antriebe, beispielsweise Linearmotoren oder andere elektromotorische Antriebe und ähnliches, zur Anwendung kommen können.

Beide mechanischen Rohrexpander 1 sind jeweils derart ausgestaltet, dass die Antriebe 40 sowohl eine Expansion der expandierenden Segmente 37 als auch einen Rückhub derselben bewirken können. Dieses ist auf Seiten des Werkzeugkopfs 30 in an sich bekannter Weise dadurch realisiert, dass an dem Keil 31 keilseitige Segmentführungen 34 und an dem Druckholm 20 druckholmseitige Segmentführungen 24 vorgesehen sind, welche bei diesen Ausführungsbeispiele durch Führungsnuten, die Hinterschneidungen aufweisen, gebildet sind, sodass über den Keil 31 bzw. über den Druckholm 20 jeweils nicht nur drückende sondern auch jeweils ziehende Kräfte auf die expandierenden Segmente 37 ausgeübt werden können. Insofern bedingt jeweils eine axiale Verlagerung des Druckholms 20 nach links bzw. eine axiale Verlagerung des Keils 31 nach rechts (jeweils in den Figuren gesehen), dass die Segmente 37 entlang der Segmentführungen 24, 34 gleitend nach radial außen wandern. Verlagern sich die Keile 31 nach links bzw. die Druckholme 20 nach rechts, so wirken die Segmentführungen 24, 34 jeweils ziehend auf die Segmente 37, sodass diese nach radial innen wandern.

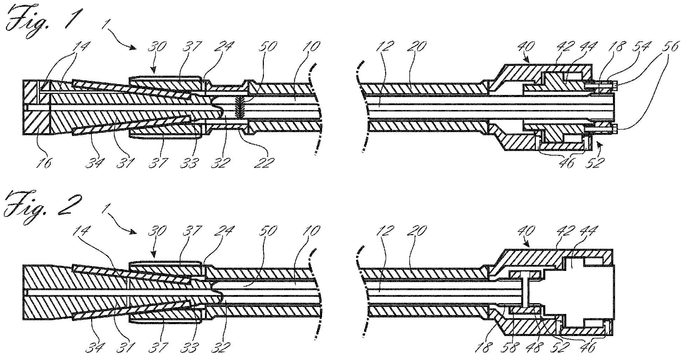

Darüber hinaus sind die Zugstangen 10 jeweils über eine zerstörungsfrei lösbare Verbindung 52 mit dem Kolben 44 des jeweiligen Antriebs 40 verbunden, wobei diese Verbindung 52 ebenfalls für beide Bewegungsrichtungen ausreichend stabil ausgebildet ist. Letzteres wird bei dem in Figur 1 dargestellten Ausführungsbeispiel durch eine Zugmutter 54 und kleinere Rückholschrauben 56 und bei dem Ausführungsbeispiel nach Figur 2 durch eine Verbindungsmutter 58 gewährleistet. Es versteht sich, dass bei abgewandelten Ausführungsbeispielen der Rückhub auch durch einen gesonderten Antrieb oder über andere Maßnahmen realisiert werden kann, ohne dass vom Grundgedanken der vorliegenden Erfindung abgewichen wird.

Bei beiden Ausführungsbeispielen weist der Keil 31 eine einstückig mit diesem ausgebildete Keilspitze 32 auf, die sich von dem spitzen Ende des Keils 31 in Richtung auf den jeweiligen Antrieb 40 erstreckt und mit einer zylinderförmigen Mantelfläche ausgebildet ist. Es versteht sich, dass in einem abgewandelten Ausführungsbeispiel auf eine Keilspitze 32 verzichtet werden kann, wenn die Zugstange 10 unmittelbar an dem spitz zulaufenden Ende des Keils 31 angesetzt ist, oder dass die Keilspitze an dem spitz zulaufenden Ende des Keils 31 über eine zerstörungsfrei nicht lösbare Verbindung ausgesetzt sein kann.

Bei dem in Figur 1 dargestellten mechanischen Rohrexpander 1 ist die Keilspitze 32 mit der Zugstange 10 über eine zerstörungsfrei nicht lösbare Verbindung 50, die bei diesem Ausführungsbeispiel als Schweißverbindung ausgebildet ist, verbunden. Bei dem in Figur 2 dargestellten Ausführungsbeispiel sind der Keil 31 und mithin auch die Keilspitze 32 sowie die Zugstange 10 einstückig miteinander ausgebildet. Letzteres hat den fertigungstechnischen Nachteil, dass etwaige mechanische Nachbearbeitungen an dem Keil 31 vorgenommen werden müssen, während dieser Keil eine äußerst lange Keilspitze 32 aufweist bzw. bereits mit der Zugstange 10 verbunden ist, was fertigungstechnisch verhältnismäßig hohe Anforderungen stellt. Es versteht sich, dass auch bei diesem Ausführungsbeispiel ohne weiteres an gegebener Position eine zerstörungsfrei nicht lösbare Verbindung vorgesehen sein kann, um diesem Nachteil zu begegnen.

Darüber hinaus weisen die Keilspitze 32 und die Zugstange 10 bei beiden Ausführungsbeispielen identischen Durchmesser auf, sodass auf diese Weise eine maximale Kraftübertragung gewährleistet ist. Auch ermöglicht insbesondere die Länge der Keilspitze 32, welche den Durchmesser der Zugstange 10 sowie den Durchmesser der Keilspitze 32 bei dem Ausführungsbeispiel nach Figur 1 übersteigt, ein ausreichendes Abklingen etwaiger lokaler Spannungsspitzen, sodass diese Verbindung 50 maximale Kraft übertragen kann.

Wie unmittelbar ersichtlich, ist bei beiden Ausführungsbeispielen der Durchmesser der zerstörungsfrei nicht lösbaren Verbindungen 50 bzw. jeder andere Durchmesser der Keilspitze 32 oder der Zugstange 10 im Inneren des Druckholms 20 kleiner als der Innendurchmesser des Druckholms 20, sodass eine Anordnung der zerstörungsfrei nicht lösbaren Verbindung 50 ohne weiteres innerhalb des Druckholms 20 möglichst ist. Dieses ermöglicht eine maximale Kraftübertragung bei gegebenem Durchmesser des Druckholms 20, was insbesondere bei kleineren Rohren, die aufgeweitet werden sollen, von Bedeutung ist.

Die Keile 31 beider Ausführungsbeispiele weisen noch Anformungen 33 auf, die eine Abstützung der keilseitigen Segmentführungen 34 sowie einer Vermeidung von Kerbwirkungen dienen. Es versteht sich, dass gegebenenfalls auch weitere Baugruppen an den Keilen 31 vorgesehen sein können.

Für die zerstörungsfrei lösbare Verbindung 52 der Zugstange 10 mit dem Kolben 44 weisen die Zugstangen 10 beider Ausführungsbeispiele jeweils eine Gewindeanformung 18 an der Zugstange 10 auf. Diese Gewindeanformung 18 ist bei beiden Ausführungsbeispielen derart gewählt, dass die Zugstange 10 jeweils noch durch den Druckholm 20 geschoben werden bzw. durch diesen entnommen werden kann. Eine entsprechende Gewindeanformung 18 kann beispielsweise durch Stauchpressen oder Schmieden bereitgestellt werden, was gegebenenfalls auch für den Keil 31 gilt, der im übrigen - insbesondere wenn er separat ausgebildet und über eine zerstörungsfrei nicht lösbare Verbindung 50 mit der Zugstange 10 verbunden ist - allerdings auch auf andere Weise, beispielsweise spanend, durch Fräsen oder Drehen, hergestellt werden kann. Es versteht sich, dass die Gewindeanformung 18 gegebenenfalls auch mit größerem radialen Durchmesser ausgebildet sein kann, wenn auf eine zerstörungsfrei mögliche Entnahme der Zugstange 10 durch den Druckholm 20 verzichtet wird bzw. wenn beispielsweise der Druckholm 20 aus zwei Halbschalen gebildet wird, die dann für eine Entnahme getrennt werden können.

Bei dem in Figur 1 dargestellten Ausführungsbeispiel durchstößt die Zugstange 10 auch den Kolben 44 und ist über eine Zugmutter 54, die auf die Gewindeanformung 18 aufgeschraubt wird, über Zug, also gegen eine Bewegung des Kolbens 44 nach rechts (in Figur 1) gesichert. Auf diese Weise dient die Zugmutter 54 der Übertragung der Hauptkräfte, welche zum Aufweiten aufgebracht werden müssen.

Zum Rückholen sind bei dem in Figur 1 dargestellten Ausführungsbeispiel Rückholschrauben 56 vorgesehen, mittels derer die Zugmutter 54 axial mit dem Kolben 44 verbunden ist, sodass bei einer Bewegung des Kolbens 44 nach links (Figur 1) die Zugmutter 54 über die Rückholschrauben 56 dieser Bewegung folgen muss und mithin auch die Zugstange 10 nach links bewegt wird, wodurch die Segmente 37 nach radial innen verlagert werden.

Bei dem in Figur 2 dargestellten Ausführungsbeispiel ist an dem dem Werkzeugkopf 30 zugewandten Ende des Kolbens 44 eine Gewindeanformung 48 an dem Kolben 44 vorgesehen, wobei die Zugstange 10 bis zu dieser Gewindeanformung 48 reicht und die beiden Gewindeanformungen 18, 48 koaxial zueinander ausgerichtet sind. Über eine Verbindungsmutter 58 werden dann der Kolben 44 und die Zugstange 10 axial in Bezug aufeinander gesichert, sodass die Zugstange 10 einer Axialbewegung des Kolbens 44 folgen muss. In einer abweichenden Ausführungsform können anstatt der Gewindeanformungen 18, 48 auch kreisförmige Nuten in entsprechenden Anformungen an der Zugstange 10 bzw. an dem Kolben 44 vorgesehen sein, in welche dann entsprechende Vorsprünge einer zweiteiligen Hülse, die an Stelle der Verbindungsmutter 48 über die entsprechenden Anformungen gesetzt wird, eingreifen, um auf diese Weise eine entsprechende Kopplung zu gewährleisten.

Wie ersichtlich, sind sowohl die Verbindungsmutter 58 als auch die Zugmutter 54 - und auch eine etwaige geteilte Hülse - radial derart groß ausgestaltet, dass diese nicht innerhalb des Druckholms 20 angeordnet werden können. Eine derartige massive radiale Ausgestaltung dient dazu, dass aufgrund dieser zerstörungsfrei lösbaren Verbindung 52 die Zugkraft, welche von dem Antrieb 40 jeweils zu dem Werkzeugkopf 30 übertragen werden soll, nicht bzw. nur unwesentlich gegenüber der maximalen Zugkraft der restlichen Zugstange 10 eingeschränkt wird.

Während der Druckholm 20 des Ausführungsbeispiels nach Figur 2 im Wesentlichen als ein Rohr mit zwei eingesetzten Flanschen ausgebildet ist, umfasst der Druckholm 20 des Ausführungsbeispiels nach Figur 1 noch ein Zwischenstück 22, welches einen unwesentlich größeren Innendurchmesser aufweist und an sich die druckholmseitigen Segmentführungen 24 trägt. Dieses Zwischenstück 22 dient bei diesem Ausführungsbeispiel der Montageerleichterung und kann gegebenenfalls zunächst gemeinsam mit dem Werkzeugkopf 30 montiert werden. Es versteht sich, dass unter Umständen auf dieses Zwischenstück 22 auch verzichtet werden kann. Ebenso versteht es sich, dass weitere Zwischenstücke vorgesehen sein können, wenn dieses sinnvoll erscheint. Ebenso ist es denkbar, den Innendurchmesser des Zwischenstücks 22 zu verkleinern, wenn dieses sinnvoll erscheint.

In der Zugstange 10 und dem Keil 31 ist darüber hinaus eine an sich bekannte Zentralbohrung 12 vorgesehen, durch welche Schmiermittel oder Leitungen, beispielsweise elektrische Leitungen, von der Antriebsseite bis zu dem Werkzeugkopf 30 gebracht werden können. Während die Zentralbohrung 12 bei dem Ausführungsbeispiel nach Figur 1 antriebsseitig offen und von außen zugänglich ist, erfolgt ein Zugang zu der Zentralbohrung 12 bei dem Ausführungsbeispiel nach Figur 2 durch eine nicht bezifferte Öffnung in der Verbindungsmutter 58.

Je nach konkreter Umsetzung können von der Zentralbohrung 12 unmittelbar Versorgungsbohrungen 14, beispielsweise für Schmiermittel, in dem Keil zu gegebenen Positionen, insbesondere in der Nähe der hochbelasteten Segmentführungen, geführt werden (siehe Ausführungsbeispiel nach Figur 2). Ebenso können entsprechende Versorgungsbohrungen 14 über ein Versorgungsansatzstück 16, welches am dem Antrieb 40 abgewandten Ende des Keils 31 angesetzt ist, in den Keil 31 verteilt werden (siehe Figur 1). Es versteht sich, dass je nach konkreter Umsetzung beide dieser Möglichkeiten oder auch nur eine dieser Möglichkeiten bei jedem dieser Ausführungsbeispiele zur Anwendung kommen kann, ohne dass vom Grundgedanken der vorliegenden Erfindung abgewichen wird.

Der äußerst massive Aufbau des Keils 31, in dem insbesondere keine große zentrale Bohrung für eine Zugstange vorgesehen sein braucht, ermöglicht auch bei kleinerem Gesamtdurchmesser, wie dieses insbesondere für mechanische Rohrexpander 1, die für Rohre mit kleinerem Durchmesser zur Anwendung kommen sollen, vorliegt, dass für derartige Versorgungsbohrungen 14 bzw. Zentralbohrungen 12 ausreichend Platz bei ausreichender Stabilität des Keils 31 verbleibt, auch wenn sehr hohe Kräfte aufgebracht werden müssen.

### Bezugszeichenliste:

| | | | |
|---|---|---|---|
| 1 | Mechanischer Rohrexpander | 34 | keilseitige Segmentführung |
| 10 | Zugstange | 37 | expandierendes Segment |
| 12 | Zentralbohrung | 40 | Antrieb |
| 14 | Versorgungsbohrung | 42 | Zylinder |
| 16 | Versorgungsansatzstück | 44 | Kolben |
| 18 | Gewindeanformung an der Zugstange 10 | 46 | Hydraulikleitung |
| | | 48 | Gewindeanformung an dem Kolben 44 |
| 20 | Druckholm | | |
| 22 | Zwischenstück | 50 | zerstörungsfrei nicht lösbare Verbin-dung |
| 24 | druckholmseitige Segmentführung | | |
| 30 | Werkzeugkopf | 52 | zerstörungsfrei lösbare Verbindung |
| 31 | Keil | 54 | Zugmutter |
| 32 | Keilspitze | 56 | Rückholschraube |
| 33 | Anformung | 58 | Verbindungsmutter |

## Patentansprüche

1. Mechanischer Rohrexpander (1) zum schrittweisen Aufweiten von Rohren, insbesondere zum Aufweiten dickwandiger Rohre mit einem Durchmesser unter 50,8 cm (20 "), umfassend eine Zugstange (10), einen hohlen Druckholm (20), in welchem die Zugstange (10) axial bezüglich des Druckholms (20) verlagerbar angeordnet ist, einen Werkzeugkopf (30), der einen mit der Zugstange (10) wirkverbunden Keil (31) sowie an dem Keil (31) angeordnete, axial an dem Druckholm (20) abgestützte und durch eine Axialbewegung des Keils (31) in Bezug auf den Druckholm (20) radial verlagerbare expandierende Segmente (37) umfasst, sowie einen die Zugstange (10) in Bezug auf den Druckholm (20) axial verlagernden Antrieb (40), wobei die expandierenden Segmente (37) weiter als der Durchmesser des Druckholms (20) radial expandierbar sind, wobei die Länge des Druckholms (20) und der Zugstange (10) mindestens das Fünffache des Durchmessers des Druckholms (20) betragen und/oder wobei an dem Keil (31) keilseitige Segmentführungen (34) und an dem Druckholm (20) druckholmseitige Segmentführungen (24) vorgesehen sind, **dadurch gekennzeichnet, dass** die Zugstange (10) und der Keil (31) über eine zerstörungsfrei nicht lösbare Verbindung (50) oder einstückig miteinander verbunden sind.

2. Mechanischer Rohrexpander nach Anspruch 1, **dadurch gekennzeichnet, dass** der Keil (31) eine Keilspitze (32) mit zylinderförmiger Mantelfläche aufweist.

3. Mechanischer Rohrexpander nach Anspruch 2, **dadurch gekennzeichnet, dass** die Keilspitze (32) einstückig mit dem restlichen Keil (31) ausgebildet ist.

4. Mechanischer Rohrexpander nach Anspruch 2 oder 3, **dadurch gekennzeichnet, dass** die Keilspitze (32) eine axiale Keilspitzenerstreckung aufweist, die größer als eine Abklinglänge ist, innerhalb derer durch die Keilform des Keils (31) und der an ihm vorgesehenen Baugruppen bedingte lokale Spannungen abgeklungen sind, bzw. größer als ein halber, vorzugsweise größer als ein ganzer, Durchmesser der Zugstange (10) ist.

5. Mechanischer Rohrexpander nach einem der Ansprüche 2 bis 4, **dadurch gekennzeichnet, dass** der Durchmesser der Zugstange (10) und der Durchmesser der Keilspitze (32) gleich sind.

6. Mechanischer Rohrexpander nach einem der Ansprüche 1 bis 5, **dadurch gekennzeichnet, dass** die zerstörungsfrei nicht lösbare Verbindung (50) axial innerhalb des Druckholms (20) angeordnet ist.

7. Mechanischer Rohrexpander nach einem der Ansprüche 2 bis 5 und nach Anspruch 6, **dadurch gekennzeichnet, dass** die Keilspitze (32) bis innerhalb des Druckholms (20) reicht.

8. Mechanischer Rohrexpander nach einem der Ansprüche 1 bis 7, **dadurch gekennzeichnet, dass** die zerstörungsfrei nicht lösbare Verbindung (50) eine Schweißverbindung ist.

9. Mechanischer Rohrexpander nach einem der Ansprüche 1 bis 8, **dadurch gekennzeichnet, dass** die Zugstange (10) und der Antrieb (40) über eine zerstörungsfrei lösbare Verbindung (52) verbunden ist, die vorzugsweise axial antriebsseitig des Druckholms (20) angeordnet ist.

10. Mechanischer Rohrexpander nach einem der Ansprüche 1 bis 9, **dadurch gekennzeichnet, dass** innerhalb des Keils (31) Versorgungsbohrungen (14), beispielsweise für Schmiermittel, vorgesehen sind.

## Claims

1. A mechanical pipe expander (1) for the step-by-step widening of pipes, particularly for widening thick-walled pipes with a diameter below 50.8 cm (20"), comprising a tie rod (10), a hollow pressure beam (20), in which the tie rod (10) is arranged in an axially displaceable manner with respect to the pressure beam (20), a tool head (30), which comprises a key (31), which is operatively connected to the tie rod (10) and expanding segments (37) that are arranged on the key (31), axially supported on the pressure beam (20) and can be displaced radially with respect to the pressure beam (20) by means of an axial movement of the key (31), and also a drive (40) that axially displaces the tie rod (10) with respect to the pressure beam (20), wherein the expanding segments (37) can be expanded radially further than the diameter of the pressure beam (20), wherein the length of the pressure beam (20) and the tie rod (10) are at least five-times the diameter of the pressure beam (20) and/or wherein key-side segment guides (34) are provided on the key (31) and pressure-beam-side segment guides (24) are provided on the pressure beam (20), **characterised in that** the tie rod (10) and the key (31) can be connected to one another by means of a connection (50), which cannot be separated in a destruction-free manner, or in one-piece.

2. The mechanical pipe expander according to Claim 1, **characterised in that** the key (31) has a key tip (32) with a cylindrical shell surface.

3. The mechanical pipe expander according to Claim 2, **characterised in that** the key tip (32) is constructed in one piece with the remainder of the key (31).

4. The mechanical pipe expander according to Claim 2 or 3, **characterised in that** the key tip (32) has an axial key tip extent, which is larger than a run-out length within which local stresses, which are caused by the wedge shape of the key (31) and the assemblies provided thereon, have run out, or larger than half of the diameter, preferably larger than the entire diameter, of the tie rod (10).

5. The mechanical pipe expander according to one of Claims 2 to 4, **characterised in that** the diameter of the tie rod (10) and the diameter of the key tip (32) are the same.

6. The mechanical pipe expander according to one of Claims 1 to 5, **characterised in that** the connection (50), which cannot be separated in a destruction-free manner, is arranged axially inside the pressure beam (20).

7. The mechanical pipe expander according to one of Claims 2 to 5 and according to Claim 6, **characterised in that** the key tip (32) reaches inside the pressure beam (20).

8. The mechanical pipe expander according to one of Claims 1 to 7, **characterised in that** the connection (50), which cannot be separated in a destruction-free manner, is a welded connection.

9. The mechanical pipe expander according to one of Claims 1 to 8, **characterised in that** the tie rod (10) and the drive (40) is connected via a connection (52), which can be separated in a destruction-free manner and is preferably arranged axially on the drive side of the pressure beam (20).

10. The mechanical pipe expander according to one of Claims 1 to 9, **characterised in that** supply bores (14), for lubricant for example, are provided inside the key (31).

## Revendications

1. Expandeur de tuyaux (1) mécanique pour l'élargissement progressif de tuyaux, notamment pour l'élargissement de tuyaux à parois épaisses, d'un diamètre inférieur à 50,8 cm (20''), comprenant une tige de traction (10), un profilé sous pression (20) creux dans lequel la tige de traction (10) est disposée en étant déplaçable en direction axiale par rapport au profilé sous pression (20), une tête d'outil (30) qui comprend une clavette (31) qui est en liaison active avec la tige de traction (10), ainsi que des segments(37) expansés, appuyés en direction axiale sur le profilé sous pression (20) et déplaçables en direction radiale, par rapport au profilé sous pression (20) par un déplacement axial de la clavette (31) par rapport au profilé sous pression (20), ainsi qu'un entraînement (40) déplaçant en direction axiale la tige de traction (10) par rapport au profilé sous pression (20), les segments (37) expansés étant susceptibles d'être expansés plus largement que le diamètre du profilé sous pression (20), la longueur du profilé sous pression (20) et de la tige de traction (10) s'élevant à au moins le quintuple du diamètre du profilé sous pression (20), et/ou sur la clavette (31) étant prévus des guidages (34) de segments côté clavette et sur le profilé sous pression (20) étant prévus des guidages (24) de segments côté profilé sous pression, **caractérisé en ce que** la tige de traction (10) et la clavette (31) sont reliées l'une à l'autre par un assemblage (50) inamovible sans destruction ou en monobloc.

2. Expandeur de tuyaux mécanique selon la revendication 1, **caractérisé en ce que** la clavette (31) comporte une pointe (32) de clavette avec une surface d'enveloppe de forme cylindrique.

3. Expandeur de tuyaux mécanique selon la revendication 2, **caractérisé en ce que** la pointe (32) de clavette est conçue en monobloc avec la clavette (31) restante.

4. Expandeur de tuyaux mécanique selon la revendication 2 ou la revendication 3, **caractérisé en ce que** la pointe (32) de clavette comporte une extension axiale de pointe de clavette qui est supérieure à une longueur d'annulation à l'intérieur de laquelle des tensions locales dues à la forme cunéiforme de la clavette (31) et aux ensembles prévus dans celle-ci sont annulées, respectivement qui est supérieure à un demi-diamètre, de préférence supérieure à un diamètre entier de la tige de traction (10).

5. Expandeur de tuyaux mécanique selon l'une quelconque des revendications 2 à 4, **caractérisé en ce que** le diamètre de la tige de traction (10) et le diamètre de la pointe de clavette (32) sont identiques.

6. Expandeur de tuyaux mécanique selon l'une quelconque des revendications 1 à 5, **caractérisé en ce que** l'assemblage (50) inamovible sans destruction est placé en direction axiale à l'intérieur du profilé sous pression (20).

7. Expandeur de tuyaux mécanique selon l'une quelconque des revendications 2 à 5, et selon la revendication 6, **caractérisé en ce que** la pointe de clavette (32) arrive jusqu'à l'intérieur du profilé sous pression (20).

8. Expandeur de tuyaux mécanique selon l'une quelconque des revendications 1 à 7, **caractérisé en ce que** la l'assemblage (50) inamovible sous pression est un assemblage soudé.

9. Expandeur de tuyaux mécanique selon l'une quelconque des revendications 1 à 8, **caractérisé en ce que** le profilé sous pression (10) et l'entraînement (40) sont reliés par un assemblage (52) amovible sans destruction qui est placé de préférence en direction axiale, côté entraînement du profilé sous pression (20).

10. Expandeur de tuyaux mécanique selon l'une quelconque des revendications 1 à 9, **caractérisé en ce qu'**à l'intérieur de la clavette (31) sont prévus des perçages d'alimentation (14), par exemple pour des lubrifiants.
